**Europäisches Patentamt**

**European Patent Office**

**Office européen des brevets**

(19)

(11) Veröffentlichungsnummer: **0 066 653**
**B1**

(12) **EUROPÄISCHE PATENTSCHRIFT**

(45) Veröffentlichungstag der Patentschrift:
**27.02.85**

(51) Int. Cl.⁴: **H 04 Q 11/04**

(21) Anmeldenummer: **81109269.1**

(22) Anmeldetag: **29.10.81**

(54) Schaltungsanordnung für Zeitmultiplex-Fernmeldevermittlungsanlagen, insb. PCM-Fernsprechvermittlungsanlagen, mit Zeitmultiplexleitungen, deren Zeitkanäle teils für Nachrichtenverbindungen und teils zur Übertragung von Signalisierungsinformationen dienen.

(30) Priorität: **04.06.81 DE 3122230**

(43) Veröffentlichungstag der Anmeldung:
**15.12.82 Patentblatt 82/50**

(45) Bekanntmachung des Hinweises auf die Patenterteilung:
**27.02.85 Patentblatt 85/9**

(84) Benannte Vertragsstaaten:
**AT CH FR GB IT LI NL SE**

(56) Entgegenhaltungen:
**FR - A - 2 042 756**
**FR - A - 2 171 246**
**GB - A - 1 529 341**

**COMMUTATION ET ELECTRONIQUE, Heft 50, Juli 1975, Seiten 7-17, Paris, FR.**

(73) Patentinhaber: **Siemens Aktiengesellschaft, Berlin und München Wittelsbacherplatz 2, D-8000 München 2 (DE)**

(72) Erfinder: **Waas, Oskar Günther, Dipl.-Ing., im Strähler 40, CH-8047 Zürich (CH)**

## Beschreibung

Die Erfindung betrifft eine Schaltungsanordnung für Zeitmultiplex-Fernmeldevermittlungsanlagen, insbesondere PCM-Fernsprechvermittlungsanlagen, mit Zeitmultiplexleitungen, auf denen jeweils eine Mehrzahl von Zeitkanälen ein Zeitmultiplex bilden, und auf denen den Zeitkanälen unterschiedliche, sukzessive aufeinanderfolgende Zeitlagen zugeordnet sind, und auf denen die Zeitlagen in Pulsrahmen geordnet sind, und auf denen jedem einzelnen der Zeitkanäle in den verschiedenen aufeinanderfolgenden Pulsrahmen jeweils die gleiche Zeitlage zugeordnet ist, und mit mit Informationsspeichern und Haltespeichern ausgestatteten Zeitlagenvielfachen, über die Zeitkanäle auf einer eingangsseitig angeschlossenen Zeitmultiplexleitung einzeln mit Zeitkanälen auf einer ausgangsseitig angeschlossenen Zeitmultiplexleitung vermittelbar sind, und mit je einem pro Zeitmultiplex vorgesehenen und als einer von dessen Zeitkanälen zur Übertragung von einzeln den übrigen Zeitkanälen zugeordneten Schaltkennzeichen dienenden Signalkanal, dessen Zeitlagen über eine Mehrzahl von Pulsrahmen hinweg zu ebenso wie die Pulsrahmen sukzessive aufeinanderfolgenden Überpulsrahmen zusammengefasst sind, innerhalb von welchen den übrigen Zeitkanälen, die verbindungsindividuell als Nachrichtenkanäle dienen, Zeitlagen innerhalb des Überpulsrahmens zugeordnet sind, und mit Informationsspeichern, bei denen der Schreibbetrieb entsprechend den aufeinanderfolgenden Zeitlagen der über die eingangsseitig angeschlossene Zeitmultiplexleitung geführten Kanäle zyklisch und der Lesebetrieb gemäss im Haltespeicher gespeicherten Informationsspeicher-Speichergliedadressen abgewickelt wird, und bei denen an mehreren Informationsspeicherplätzen Signalkanal-Teilinformationen gemäss der stets wiederkehrenden Reihenfolge ihrer Zeitlagen innerhalb jeder der Überpulsrahmen zyklisch gespeichert werden und mit Haltespeichern, welche entsprechend den aufeinanderfolgenden Zeitlagen der über die ausgangsseitig angeschlossene Zeitmultiplexleitung geführten Kanälen zyklisch gelesen werden.

Eine Schaltungsanordnung dieser Art ist bereits durch die französische Patentanmeldung FR-A Nr. 2042756 bekannt. In Zeitmultiplex-Fernmeldeanlagen, die darin sowie auch in der Zeitschrift „telcom report" (4. Jahrgang/1981/Beiheft) beschrieben sind, ist für eine Mehrzahl von Zeitkanälen, z.B. für 30 Zeitkanäle, je ein gemeinsamer Signalkanal vorgesehen. Dieser dient zur Übertragung von Signalisierungsinformationen einzeln in Zuordnung für jeden der übrigen (30) Zeitkanäle, die als Nachrichtenkanäle für die Herstellung einzelner Verbindungen individuell und wahlfrei in Anspruch genommen werden können.

Die über eine Zeitmultiplexleitung übertragenen und den Zeitkanälen individuell entsprechenden Teilinformationen sind in ganz allgemein bekannter Weise in Pulsrahmen geordnet. Ein Pulsrahmen umfasst immer eine Reihe von Teilinformationen, von denen je eine je einem Zeitkanal zugeordnet ist. Eine der Teilinformationen ist dem Signalkanal zugeordnet. Da die dem Signalkanal innerhalb eines einzigen Pulsrahmens zugeordnete Teilinformation nicht ausreichen würde, um für die als Nachrichtenkanäle dienenden übrigen Zeitkanäle der betreffenden Zeitmultiplexleitung diesen Nachrichtenkanälen individuelle Schaltkennzeichen zu signalisieren (vgl. DE-PS Nr. 1910974), sind die dem Signalkanal entsprechenden Teilinformationen über mehrere Pulsrahmen hinweg zu Überpulsrahmen zusammengefasst (vgl. die bereits genannte französische Patentanmeldung), innerhalb derer die zeitliche Lage, also die zeitliche Relation zum jeweiligen Beginn eines jeden Überpulsrahmens, die Zuordnung einer Teilinformation individuell zu einem der als Nachrichtenkanäle verwendeten übrigen Zeitkanäle angibt. Dabei kann die dem Signalkanal zugeordnete Teilinformation innerhalb jeweils eines Pulsrahmens je einem der übrigen oder auch je zwei oder mehreren der als Nachrichtenkanäle verwendeten übrigen Zeitkanäle der betreffenden Zeitmultiplexleitung zugeordnet sein, oder es kann die Teilinformation innerhalb zweier oder mehrerer aufeinanderfolgender Pulsrahmen je einem der übrigen Zeitkanäle zugeordnet sein. Üblicherweise ist die innerhalb eines einzigen Pulsrahmens liegende, dem Signalkanal zugeordnete Teilinformation jeweils in zwei Teile je gleicher Anzahl von Bits unterteilt, von denen je einer einem der übrigen, also als Nachrichtenkanäle dienenden Zeitkanäle individuell zugeordnet ist.

In Zeitmultiplex-Fernsprechvermittlungsanlagen (s. z.B. die genannte Zeitschrift „telcom report") ist es üblich, die den Zeitkanälen jeder der Zeitmultiplexleitungen zugeordneten, der Signalisierung von Schaltkennzeichen dienenden Signalisierungsteilinformationen mit Hilfe einer dezentralen Steuereinrichtung einer Anschlussgruppe (LTG) aufzunehmen (gleiches gilt für Analog-Verbindungsleitungen und für Analog-Teilnehmerleitungen) und einem zentralen Steuerwerk zuzuleiten. Dieses verarbeitet die Signalisierungsteilinformationen und führt sie gezielt den dezentralen Steuereinrichtungen von denjenigen Anschlussgruppen zu, über die die Verbindungen weitervermittelt wurden, die über die der genannten Zeitmultiplexleitung angehörenden Zeitkanäle verlaufen.

Um nun die erhebliche Steuerwerksbelastung, die sich aus der blossen Schaltkennzeichenweitergabe mittels Signalisierungsteilinformationen ergibt, die von den Anschlussgruppen immer dem der Signalisierung von Schaltkennzeichen dienenden Zeitkanal jeder der Zeitmultiplexleitungen entnommen und danach wieder jedem dieser Zeitkanäle gemäss den Vermittlungsdaten jeder einzelnen sämtlicher durchgeschalteter Verbindungen zuzuführen sind, wesentlich herabzusetzen, wurde gemäss der DE-PS Nr. 1910974 eine Anordnung geschaffen, die zur Vermittlung von der Signalisierung von Schaltkennzeichen dienenden Teilinformationen aus einem Koppelfeld zur Durchschaltung von Nachrichtenverbindungen (Verbindungskoppelfeld) zusätzlich ein weiteres Koppelfeld (Signalkoppelfeld) zur Durchschaltung solcher Verbindungen vorsieht, über das die den Nachrichtenverbindungen entsprechenden und der Signalisierung von Schaltkennzeichen dienenden Teilinformationen vermittelbar sind. Diese Schaltungsanordnung geht davon aus, dass jede dieser Teilinformationen mit je einer Zuordnungsinformation versehen ist, die die Zuordnung zum jeweiligen Nachrichtenzeitkanal angibt. Die bereits genannte französische Patentschrift beschreibt darüber hinaus eine Lösung, bei der diesen Teilinformationen keine Zuordnungsinformationen beigefügt zu sein brauchen. Jedoch ist hierin ausser einem Sprachspeicher (einem Speicher für die Nutzinformation) zusätzlich ein Signalspeicher (ein Speicher für die Signalisierungsinformationen) erforderlich. Es ist zwar auch erwähnt, dass die im Signalkanal empfangenen Signale auch im Sprachspeicher gespeichert werden können, sofern das erwünscht sei. Es ist aber nichts darüber gesagt, wie das geschehen kann und welchem Zweck das dienen soll und welche weitere Behandlung und Verwendung für diese im Sprachspeicher gespeicherten Signale vorgesehen ist. Über die Signalinformation ist gesagt, dass sie im Signalspeicher gespeichert ist, von dort an einen Zwischenspeicher weitergegeben wird und von da wieder zur Aussendung kommt im Signalkanal.

Für die Erfindung besteht die Aufgabe, in einer Schaltungsanordnung der eingangs angegebenen Art für die jeder Verbindung beigegebenen Signale ebenso wie für die Nutzinformation zeitmultiplex durchgeschaltete Verbindungswege bereitzustellen und hierzu unter Erübrigung von zusätzlichen Zuordnungsinformationen sowie von besonderen Signalspeichern und/oder Zwischenspeichern den Informationsspeicher (Sprachspeicher) mitauszunutzen. Es soll folglich ein und derselbe Informationsspeicher zur Vermittlung von Zeitmultiplexverbindungen, also pro Zeitmultiplexverbindung für die Vermittlung sowohl der im Pulsrahmenrhythmus über eine Zeitmultiplexleitung eintreffenden und über eine andere Zeitmultiplexleitung wieder auszusendenden Nutzinformationen (Sprachinformationen) als auch der in Überpulsrahmenrhythmus über dieselben Leitungen übertragenen und zu übertragenden Signalisierungsinformationen betreibbar sein.

Diese Aufgabe wird erfindungsgemäss dadurch gelöst, dass einem Informationsspeicher ausser einem ersten Haltespeicher, dessen Lesezyklus der Pulsrahmendauer entspricht, ein zweiter Haltespeicher zugeordnet ist, dessen Weiterschaltung mit jedem Lesezyklus des ersten Haltespeichers erfolgt, wodurch dessen Lesezyklus demgemäss einer Überpulsrahmendauer entspricht, die ein Mehrfaches der Pulsrahmendauer beträgt, dass die in dem Informationsspeicher der Aufnahme der Signalkanal-Teilinformationen dienenden Informationsspeicherplätze dementsprechend mehrfach vorgesehen sind, und dass regelmässig bei Erreichen desjenigen Haltespeicherplatzes beim zyklischen Lesevorgang des ersten Haltespeichers, der einer der Signalkanal-Zeitlagen — also einer der Pulsrahmen-Zeitlagen — entspricht, mit Hilfe einer Informationsspeicher-Speicherplatzadresse, die im zweiten Haltespeicher gemäss der innerhalb eines Überpulsrahmens erreichten Zeitlage — also einer Überpulsrahmen-Zeitlage — gespeichert ist, ein diejenige Signalkanal-Teilinformation speicherndes Informationsspeicherglied angesteuert wird, die zu demjenigen der übrigen Zeitkanäle gehört, welchem die genannte Pulsrahmen-Zeitlage und die genannte Überpulsrahmen-Zeitlage fest zugeordnet sind.

Durch die Erfindung wird also erreicht, dass die Lesevorgänge bei einem Informationsspeicher teils im Pulsrahmenrhythmus und teils im Überpulsrahmenrhythmus durchgeführt werden können. Hierfür sind die beiden Haltespeicher vorgesehen. Dadurch, dass der Informationsspeicher teils im Pulsrahmenrhythmus und teils im Überpulsrahmenrhythmus betreibbar ist, kann ein und derselbe Informationsspeicher sowohl für Nutzinformationen (z.B. Sprachinformationen) als auch für Signalisierungsinformationen zwecks Signalisierung von Schaltkennzeichen verwendet werden. Dies hat besondere Bedeutung für sogenannte Standverbindungen; das sind über Kanäle, im vorliegenden Falle also Zeitmultiplexkanäle, durchgeschaltete Verbindungen, die über längere Zeit im durchgeschalteten Zustand bestehen bleiben, zur Direktverbindung anderer Vermittlungsstellen miteinander dienen, und über die einzelne gewählte Verbindungen nacheinander aufgebaut und auch wieder ausgelöst werden, ohne dass die Steuerorgane der betreffenden Vermittlungsstelle, in der solche Standverbindungen durchgeschaltet sind, selbst etwas mit der Schaltkennzeichenweitergabe in der weiter oben erwähnten Weise zu tun haben.

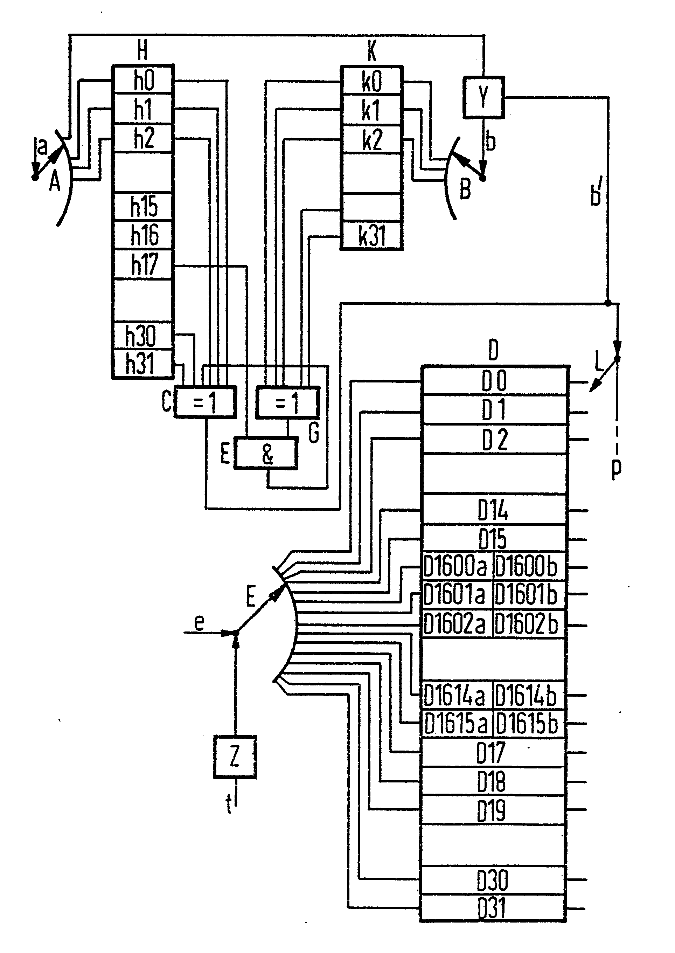

In der Zeichnung ist ein Ausführungsbeispiel der Erfindung nur in wesentlich zu ihrem Verständnis beitragenden Bestandteilen dargestellt. Die nachfolgende Beschreibung, die zunächst die allgemeinen Zusammenhänge und Funktionen des erfindungsgemässen Ausführungsbeispiels behandelt und erst weiter unten auf seine erfindungsgemässen Besonderheiten eingeht, setzt ein für PCM-Verbindungen ausgelegtes mehrstufiges Koppelfeld, das teils aus Zeitstufen und teils aus Raumstufen aufgebaut ist, als für den Fachmann bereits vielfältig bekannt voraus; beispielsweise ist in der DE-AS Nr. 2108745, insbesondere in Fig. 1 nebst Beschreibung, ein derartiges Koppelfeld dargestellt und beschrieben.

In der Zeichnung ist ein Zeitlagenvielfach dargestellt. Eine ankommende Zeitmultiplexleitung ist mit e und eine abgehende Zeitmultiplexleitung mit p bezeichnet.

Das dargestellte Zeitlagenvielfach ist Bestandteil einer grösseren PCM-Zeitmultiplex-Koppelanordnung. Zur Herstellung einer Verbindung wird in an sich bekannter Weise mit Hilfe einer Wegesucheinrichtung ein freier Verbindungsweg gesucht und ausgewählt, der über freie Verbindungskanäle der Zeitmultiplexleitungen aufgebaut werden kann. Im Zusammenhang hiermit sind Haltespeicher vorgesehen. Die Haltespeicher H und K sind dem dargestellten Zeitlagenvielfach zugeordnet. Ebenso sind Haltespeicher weiteren, nicht dargestellten Zeitlagenvielfachen und Raumlagenvielfachen zugeordnet.

Die zuvor erwähnten Haltespeicher dienen zur Speicherung von Vermittlungsdaten, die die Zuordnung abgehender Zeitkanäle zu ankommenden Zeitkanälen jeweils innerhalb einer der genannten Vielfache angeben. Diese Zuordnung entspricht den Durchschaltedaten für jeweils eine Verbindung in einem Raumkoppelvielfach konventioneller Art (Ein-/Ausgangskoordinatenleitungsnummer).

Vermittlungsdaten werden bekanntlich mit Hilfe einer Wegesucheinrichtung jeweils für eine Verbindung anhand von in einem Belegungsspeicher (in Anlagen älterer Bauart: Wegesuchnetzwerk) gespeicherten Daten über den Zustand (frei oder belegt) aller massgeblichen Teile des Koppelfeldes, hauptsächlich der Zwischenleitungen, durch informationsverarbeitende Verknüpfungsvorgänge ermittelt. Diese Vermittlungsdaten geben eindeutig den Verlauf einer über das mehrstufige Koppelfeld durchzuschaltenden und durchgeschalteten Verbindung hinsichtlich der dabei in Anspruch genommenen Zwischenleitungen und Koppelpunkte bzw. Zeitmultiplexleitungen, Zeitkanäle, Zeitlagen usw. an. Auch im vorliegenden Falle finden solche Wegesuchvorgänge für jede durchzuschaltende Verbindung statt. Handelt es sich dabei anstatt um eine Einkanalverbindung um eine Mehrkanalverbindung, so können mehrere solcher Wegesuchvorgänge einzeln für die dabei erforderlichen mehreren Verbindungsherstellungsvorgänge durchgeführt werden.

Die mittels Wegesuchvorgängen ermittelten Vermittlungsdaten werden — soweit sie eine über die betreffende Zeitmultiplex-Koppelanordnung führende Verbindung betreffen — in Haltespeichern der Zeitlagenvielfache und der Raumlagenvielfache gespeichert. Bei den Zeitlagenvielfachen sind den Kanalnummern der abgehenden Zeitkanäle die Speicherplätze des jeweils zugeordneten Haltespeichers bleibend zugeordnet. Die über die ankommenden Zeitkanäle einer PCM-Zeitmultiplexleitung pro Pulsrahmen eintreffenden verbindungsindividuellen Teilinformationen werden zyklisch in den dem betreffenden Zeitlagenvielfach jeweils zugeordneten Vollspeicher, z.B. D, eingeschrieben. Im Gegensatz hierzu erfolgt der Lesebetrieb, der einer Weitergabe dieser Teilinformationen einzeln über die abgehenden Zeitkanäle dient, gemäss den Vermittlungsdaten, die die Zuordnung der abgehenden Zeitkanäle zu den ankommenden Zeitkanälen angeben und pro abgehenden Zeitkanal auf Speicherplätzen eines Haltespeichers in Form von Speicherplatzadressen der Vollspeicher gespeichert sind. In einem Haltespeicher ist also pro abgehenden Zeitkanal auf einem jeweils diesem bleibend zugeordneten Speicherplatz angegeben, unter welcher Vollspeicher-Speicherplatzadresse die über diesen Zeitkanal weiterzugebende Teilinformation eingeschrieben d.h. zwischengespeichert ist.

Den Zeitkanälen einer abgehenden Zeitmultiplexleitung sind — wie erläutert — die Speicherplätze eines Haltespeichers bleibend zugeordnet. Zwecks Weitergabe der zwischengespeicherten Teilinformationen aus dem Vollspeicher werden folglich die Speicherplätze eines Haltespeichers gemäss den Zeitlagen der abgehenden Zeitkanäle zyklisch angesteuert.

Das zuvor erwähnte zyklische Einschreiben der über eine an einem PCM-Zeitlagenvielfach ankommende Zeitmultiplexleitung, z.B. e, eintreffenden Teilinformationen in den Vollspeicher, z.B. D, des Zeitlagenvielfaches erfolgt mit Hilfe einer Ansteuerschreibeinrichtung, z.B. E. Die Ansteuerschreibeinrichtung eines Zeitlagenvielfaches wird also zwecks Abwicklung dieses zyklischen Einschreibens kontinuierlich weitergeschaltet. Das Auslesen der über eine von einem PCM-Zeitlagenvielfach, z.B. Z1, Z2, weiterführenden Zeitmultiplexleitung, z.B. p, erfolgt mit Hilfe des betreffenden Haltespeichers.

Nachdem die Beschreibung bisher in allgemeiner Weise die Zusammenhänge und Funktionen des erfindungsgemässen Ausführungsbeispieles behandelt hat, geht sie nun vermehrt auf seine erfindungsgemässen Besonderheiten ein.

Im „Orange Book", vol. III-2, Empfehlung Rec. G. 732 (Line Transmission/4. Signalling, S. 429 ff.) der Sixth Plenary Assembly (27.9.-8.10.1976) des International Telegraph and Telephone Consultative Committee (CCITT) ist ein PCM-Zeitmultiplexsystem beschrieben, in dem auf einer Zeitmultiplexleitung 32 Kanäle durch Zeitvielfachteilung gebildet sind. Ein Kanal (Kanal 0) dient u.a. zur Übertragung eines Rahmenkennnungszeichens, wodurch die Zeitlage der Pulsrahmengrenzen angegeben wird. Ein weiterer Kanal (Kanal 16=Signalisierkanal) dient zur Übertragung von Signalisierinformation für alle übrigen 30 Kanäle, die als Nachrichtenkanäle verwendbar und hierzu bei Herstellung individueller Verbindungen einzeln und wahlfrei in an sich bekannter Weise belegbar sind. Signalisierinformationen dienen in an sich bekannter Weise zur Kennzeichnung des Anfangs und des Endes von Schaltkennzeichen, z.B. Wahlendekennzeichen, Beginnzeichen, Schlusszeichen, Zählimpulsen und dergleichen, die in Zusammenhang einer jeweils aufgebauten Verbindung ausser der eigentlichen Nachrichteninformation zu übertragen sind.

Die pro Kanal und pro Pulsrahmen übertragbaren Teilinformationen werden auch als Worte bezeichnet. Ein Wort umfasst immer eine Folge von 8 bit pro Kanal und pro Pulsrahmen.

Da nun 8 bit zur Signalisierung von Schaltkennzeichen für die als Nachrichtenkanäle verwendbaren 30 genannten Kanäle nicht ausreichen würden, sind die Worte jeweils der sechzehnten Zeitlage von insgesamt 16 aufeinanderfolgenden Pulsrahmen zu einem Überpulsrahmen zusammengefasst. Eines dieser Worte dient u.a. zur Kennzeichnung der Zeitlage der Überpulsrahmengrenzen. Von den übrigen 15 Worten des Signalisierkanals dient je eines zur Signalisierung für zwei Nachrichtenkanäle. Jedes dieser Worte besteht aus 8 bit. Die ersten 4 bit — auch als Halbwort bezeichnet — sind immer einem Nachrichtenkanal und die weiteren 4 bit — ebenfalls als Halbwort bezeichnet — eines Wortes sind einem weiteren Nachrichtenkanal fest zugeordnet. Folglich ergibt sich die Zuordnung eines jeden Halbwortes zu einem Nachrichtenkanal einerseits aus der Zeitlage des betreffenden Wortes im Signalisierkanal in Relation zu dessen Überpulsrahmengrenzen und andererseits daraus, ob das betreffende Halbwort innerhalb dieses Wortes an erster oder an zweiter Stelle steht. Diese Zuordnung ist also generell festgelegt und bedarf keiner Zuordnungsinformation, wie es in der DE-PS Nr. 1910974 beschrieben wird.

In der Zeichnung ist auszugsweise ein Zeitlagenvielfach dargestellt. Es ist Bestandteil eines mehrstufigen Koppelfeldes einer PCM-Fernsprechvermittlungsanlage. Eingangsseitig ist an das Zeitlagenvielfach eine Zeitmultiplexleitung e angeschaltet. Ebenfalls ist ausgangsseitig an das Zeitlagenvielfach eine Zeitmultiplexleitung angeschaltet, die mit p bezeichnet ist. Über diese Zeitmultiplexleitungen sind die genannten 32 Zeitkanäle geführt. Sie bilden in an sich bekannter Weise ein Zeitmultiplex. Den Zeitkanälen sind unterschiedliche, sukzessive aufeinanderfolgende Zeitlagen fest zugeordnet. Diese Zeitlagen sind in bekannter Weise in Pulsrahmen geordnet. Jedem einzelnen der Zeitkanäle ist in den verschiedenen aufeinanderfolgenden Pulsrahmen jeweils die gleiche Zeitlage zugeordnet.

Das Zeitlagenvielfach ist mit einem Informationsspeicher D und zwei Haltespeichern H und K ausgestattet. Über das Zeitlagenvielfach sind die Zeitkanäle auf der eingangsseitig angeschlossenen Zeitmultiplexleitung e einzeln mit den Zeitkanälen auf der ausgangsseitig angeschlossenen Zeitmultiplexleitung p vermittelbar.

Einer der Zeitkanäle dient zur Übertragung von einzeln den übrigen Zeitkanälen zugeordneten Schaltkennzeichen. Dieser Kanal wird als Signalkanal oder auch (zuvor) als Signalisierkanal bezeichnet. Es wurde bereits beschrieben, dass dessen Zeitlagen über eine Mehrzahl von Pulsrahmen hinweg zu ebenso wie die Pulsrahmen sukzessive aufeinanderfolgenden Überpulsrahmen zusammengefasst sind; wie ebenfalls bereits beschrieben, sind die Zeitlagen innerhalb der Überpulsrahmen den übrigen Zeitkanälen, die verbindungsindividuell als Nachrichtenkanäle dienen, fest zugeordnet. Die in dieser festen Zuordnung liegende zeitliche Relation der als Signalisierinformationen dienenden Halbworte legt fest, welchem der als Nachrichtenkanäle dienenden Zeitmultiplexkanäle jeweils ein Halbwort zum Zwecke der Schaltkennzeichensignalisierung zugeordnet ist.

Bei dem Informationsspeicher D wird der Schreibbetrieb entsprechend den aufeinanderfolgenden Zeitlagen der über die eingangsseitig angeschlossene Zeitmultiplexleitung e geführten Kanäle zyklisch abgewickelt. Hierzu dient eine Schreibeinrichtung E. Der Lesebetrieb wird dagegen gemäss im Haltespeicher gespeicherten Informationsspeicher-Speichergliedadressen abgewickelt. Wie noch ausgeführt werden soll, sind insgesamt zwei Haltespeicher H und K vorgesehen. Die Haltespeicher werden entsprechend den aufeinanderfolgenden Zeitlagen der über die ausgangsseitig angeschlossene Zeitmultiplexleitung p geführten Kanäle zyklisch gelesen.

Wie aus der Zeichnung zu entnehmen ist, weist der Informationsspeicher D Informationsspeicherglieder D0 bis D15 und D17 bis D31 auf. Wie bekannt, dient jeweils der erste Kanal u.a. zur Übertragung des Pulsrahmenkennungswortes. Dies dient in bekannter Weise der Synchronisierung. Die Informationsspeicherglieder D1 bis D15 und D17 bis D31 dienen der Aufnahme der sukzessive nacheinander über die Zeitmultiplexleitung e eintreffenden PCM-Worte der als Nachrichtenkanäle dienenden Kanäle dieser Zeitmultiplexleitung. Demgemäss wird die Schreibeinrichtung E beim Empfang dieser PCM-Worte sukzessive von Informationsspeicherglied zu Informationsspeicherglied (D1 bis D15 und D17 bis D31) weitergeschaltet.

Zwischen dem Informationsspeicherglied D15 und dem Informationsspeicherglied D17 sind 16 weitere Informationsspeicherglieder D1600a/D1600b bis D1615a/D1615b vorgesehen. Diese dienen der Aufnahme der Signalisierinformationen. Das erste dieser Informationsspeicherglieder D1600a/D1600b dient u.a. zur Aufnahme des Überpulsrahmenkennungswortes. Die weiteren Informationsspeicherglieder D1601a/D1601b bis D1615a/D1615b dienen zur Aufnahme der der Signalisierung von Schaltkennzeichen dienenden Halbworte. Jedes der Informationsspeicherglieder, z.B. D1600a/D1600b, ist in zwei Teile, z.B. D1600a und D1600b, unterteilt. Ein Informationsspeicherglied umfasst insgesamt 8 bit, jedes seiner beiden Teile umfasst folglich 4 bit Speicherkapazität. Jeder der beiden Teile dieser Informationsspeicherglieder D1601a/D1601b bis D1615a/D1615b ist jeweils einem der als Nachrichtenkanäle verwendeten übrigen Kanäle fest zugeordnet, die über die Zeitmultiplexleitung e verlaufen.

Wie bereits ausgeführt, dient von den über den Signalkanal übertragenen PCM-Worten das erste innerhalb eines Überpulsrahmens u.a. zur Übertragung des Überpulsrahmenkennungswortes. Das zweite dieser PCM-Worte umfasst die beiden der Signalisierung von Schaltkennzeichen dienenden Halbworte, die zwei ersten der als Nachrichtenkanäle dienenden übrigen Zeitkanäle zugeordnet sind. Entsprechendes gilt für die weiteren über den Signalkanal übertragenen PCM-Worte.

Wie ausgeführt wurde, wird die Schreibeinrichtung E des Informationsspeichers D gemäss dem zyklischen Schreibvorgang kontinuierlich weitergeschaltet. Diese Kontinuität ist bezüglich der Weiterschaltung vom Informationsspeicherglied D15 zum jeweils nächsten Informationsspeicherglied so gestaltet, dass die Weiterschaltung immer zu demjenigen der Informationsspeicherglieder des Informationsspeichers D erfolgt, das der Zeitlage des der Signalisierung von Schaltkennzeichen dienenden und jeweils in dieser Zeitlage aufzunehmenden PCM-Wortes entspricht, und dass die jeweils nächstfolgende Weiterschaltung direkt zum Informationsspeicherglied D17 erfolgt. Die Schreibeinrichtung E, die mit Hilfe von Taktimpulsen über eine Taktimpulsleitung t kontinuierlich weitergeschaltet wird, ist zu dem zuvor beschriebenen Zweck mit einer Zähleinrichtung Z ausgestattet, mit deren Hilfe bei der Weiterschaltung vom Informationsspeicherglied D15 zu einem der Informationsspeicherglieder D1600a/D1600b bis D1615a/D1615b und von diesem zum Informationsspeicherglied D17 die zuvor angegebene Arbeitsweise in für den Fachmann geläufiger Weise bewerkstelligt wird.

Wie bereits ausgeführt wurde, ist dem Informationsspeicher D ausser einem ersten Haltespeicher H, dessen Lesezyklus der Pulsrahmendauer entspricht, ein zweiter Haltespeicher K zugeordnet. Dessen Weiterschaltung erfolgt mit jedem Lesezyklus des ersten Haltespeichers. Hierzu ist eine Steuerleitung b vorgesehen, über die bei jeweils einem Umlauf der Leseeinrichtung A des Haltespeichers H die Leseeinrichtung B des Haltespeichers K einen Weiterschaltimpuls empfängt. Die Leseeinrichtung A des Haltespeichers H wird mit einem zentralen Impulstakt weitergeschaltet.

Im Haltespeicher H sind die bereits erwähnten Vermittlungsdaten gespeichert. Diese Speicherung erfolgt in Zuordnung je eines Haltespeichergliedes (h0 bis h31) zu jeweils einer Zeitlage der über die abgehende Zeitmultiplexleitung p geführten Zeitkanäle. In jedem der Haltespeicherglieder h0 bis h31 sind also die den einzelnen Zeitkanälen auf der Zeitmultiplexleitung p zugeordneten Vermittlungsdaten gespeichert. Diese Speicherung erfolgt in an sich bekannter Weise in Zusammenhang mit der bereits erwähnten Wegesucheinrichtung. Die gespeicherten Vermittlungsdaten geben jeweils die vermittlungstechnische Zuordnung der über die abgehende Zeitmultiplexleitung p geführten Zeitkanäle zu den über die ankommende Zeitmultiplexleitung e geführten Zeitkanälen an.

Der Lesevorgang beim Informationsspeicher D wird mit Hilfe einer Leseeinrichtung L abgewickelt. Diese Leseeinrichtung wird mit Hilfe der für sie als Ansteueradressen dienenden Vermittlungsdaten gesteuert, die sukzessive nacheinander mit Hilfe der Leseeinrichtung A des Haltespeichers H seinen Haltespeichergliedern h0 bis h31 entnommen werden. Die Leseeinrichtung L wird also nicht kontinuierlich wie die Schreibeinrichtung E weitergeschaltet, sondern nach Massgabe der im Haltespeicher H gespeicherten Vermittlungsdaten. Diese Vermittlungsdaten passieren die Gatterschaltung C, sofern die Gatterschaltung E kein Ausgangssignal abgibt. Dies ist immer der Fall, wenn die Leseeinrichtung A des Haltespeichers H auf eines der Haltespeicherglieder h0 bis h15 und h17 bis h31 eingestellt ist.

Erreicht die Leseeinrichtung A des Haltespeichers H das Haltespeicherglied h16, so gelangt eine Hilfsinformation aus dem Haltespeicherglied h16 zur Gatterschaltung E, die in der dargestellten Weise als Und-Schaltung ausgebildet ist. Über die Gatterschaltung G wird ausserdem vom zweiten Haltespeicher K eine Informationsspeichergliedadresse als Ausgangsinformation angeboten, die ebenfalls zur Und-Schaltung E gelangt.

Wie bereits beschrieben wurde, entspricht der Lesezyklus des Haltespeichers H der Pulsrahmendauer und der Lesezyklus des Haltespeichers K, dessen Weiterschaltung mit jedem Lesezyklus des Haltespeichers H erfolgt, jeweils einer Überpulsrahmendauer, die ein Mehrfaches der Pulsrahmendauer beträgt, und zwar ein sechzehnfaches. Erreicht nun die Leseeinrichtung A des Haltespeichers H das Haltespeicherglied h16, so befindet sich die Leseeinrichtung B des Haltespeichers K bereits in Einstellung auf eines der Haltespeicherglieder k0 bis k31. Regelmässig bei Erreichen desjenigen Haltespeicherplatzes beim zyklischen Lesevorgang des ersten Haltespeichers H, der der Signalkanal-Zeitlage – also einer der Pulsrahmen-Zeitlagen – entspricht, wird mit Hilfe einer Informationsspeicher-Speicherplatzadresse, die im zweiten Haltespeicher K gemäss der innerhalb eines Überpulsrahmens erreichten Zeitlage – also einer Überpulsrahmen-Zeitlage – gespeichert ist, ein diejenige Signalkanal-Teilinformation speicherndes Informationsspeicherglied angesteuert, die zu demjenigen der übrigen Zeitkanäle gehört, welchem die genannte Pulsrahmen-Zeitlage sowie die genannte Überpulsrahmen-Zeitlage fest zugeordnet ist. Die im Haltespeicher H gespeicherte Hilfsinformation bewirkt also bei Erreichen des Haltespeichergliedes h16, dass die im jeweils von der Leseeinrichtung B des Haltespeichers K erreichten Haltespeicherglied, z.B. k2, gespeicherte Informationsspeicher-Speichergliedadresse über die Gatterschaltungen E, G und C als Einstellinformation zur Leseeinrichtung L des Informationsspeichers D weitergegeben wird.

Da die Einstellung der Leseeinrichtung B des Haltespeichers K bei den aufeinanderfolgenden Pulsrahmen immer eine andere ist, und da die jeweils bei Erreichen der Signalkanal-Zeitlage über die Gatterschaltungen E, G und C empfangene Informationsspeichergliedadresse von Pulsrahmen zu Pulsrahmen immer wieder eine andere ist, wird in den aufeinanderfolgenden Pulsrahmen die Leseeinrichtung L jeweils beim Erreichen der Signalkanal-Zeitlage immer auf ein anderes Informationsspeicherglied der Informationsspeicherglieder D1600a/D1600b bis D1615a/D1615b eingestellt.

Es wäre zwar auch möglich, in jedem der Informationsspeicherglieder D1600a/D1600b bis D1615a/D1615b nur die einem Nachrichtenkanal zugeordnete Signalisierinformation zu speichern, aber dies würde einen grösseren erforderlichen Speicheraufwand beim Informationsspeicher zur Folge haben. Tatsächlich ist deshalb in einem Informationsspeicherglied, z.B. D1601a/D1601b, die Signalisierinformation gespeichert, die zwei verschiedenen Nachrichtenkanälen zugeordnet ist. Gespeichert sind also je zwei Halbworte in je einem Informationsspeicherglied.

Beim Lesen eines der Informationsspeicherglieder D1600a/D1600b bis D1615a/D1615b mittels einer dem Haltespeicher K jeweils entnommenen Informationsspeichergliedadresse kommt immer nur eines der beiden Halbworte zur Aussendung über die Zeitmultiplexleitung p, und zwar jeweils dasjenige Halbwort, welches durch die oben erwähnten Vermittlungsdaten einem bestimmten Nachrichtenkanal auf der Zeitmultiplexleitung p zugeordnet ist. Zusätzlich zu einer im Haltespeicher K gespeicherten Informationsspeichergliedadresse ist deshalb immer noch eine Angabe darüber gespeichert, welches der beiden in einem Informationsspeicherglied gespeicherten Halbworte dem betreffenden Nachrichtenkanal auf der Zeitmultiplexleitung p vermittlungstechnisch zugeordnet ist. Ausser der jeweiligen Informationsspeichergliedadresse ergibt sich also auch die zuvor erwähnte Angabe aus den weiter oben beschriebenen Vermittlungsdaten.

Zur Präzisierung der vorausgehenden Ausführungen ist festzustellen, dass in der Signalkanal-Zeitlage innerhalb jedes der Pulsrahmen ebenso wie empfangsseitig auch sendeseitig immer zwei Halbworte zur Aussendung zu bringen sind. Deshalb müssen innerhalb der Signalkanal-Zeitlage immer zwei Lesevorgänge der Leseeinrichtung L nacheinander durchgeführt werden. Dabei gelangt das beim ersten dieser beiden Lesevorgänge aus dem Informationsspeicher in der zuvor beschriebenen Weise entnommene Halbwort innerhalb der Signalkanal-Zeitlage an die zeitlich erste Stelle und das beim zweiten Lesevorgang entnommene Halbwort an die zeitlich zweite Stelle. Für die innerhalb eines Überpulsrahmens auszusendenden 32 Halbworte, das sind also 16 PCM-Worte jeweils in der Signalkanal-Zeitlage, die über die Zeitmultiplexleitung p auszusenden sind, sind 32 Informationsspeicher-Speicherplatzadressen erforderlich. Deshalb ist der Haltespeicher K auch mit 32 Speichergliedern ausgestattet. Immer wenn der Haltespeicher H das Haltespeicherglied h16 erreicht, wird in der beschriebenen Weise aus dem Haltespeicher K zunächst eine Informationsspeicher-Speichergliedadresse entnommen, der die zusätzliche Angabe darüber beigefügt ist, welches der beiden in einem Informationsspeicherglied gespeicherten Halbworte dem betreffenden Nachrichtenkanal auf der Zeitmultiplexleitung p vermittlungstechnisch zugeordnet ist. Die Leseeinrichtung L wird dadurch eingestellt und es erfolgt in der beschriebenen Weise ein erster Lesevorgang innerhalb der Signalkanal-Sendezeitlage und die Aussendung über die Zeitmultiplexleitung p. Die genannte zusätzliche Angabe wird auch als Positionsangabe bezeichnet (s.u.!). Ist der erste Lesevorgang der Leseeinrichtung B erfolgt und die Leseeinrichtung L dadurch eingestellt, so erhält eine Takteinrichtung Y, die in der Steuerleitung b liegt, über eine Steuerleitung b' einen Fortschalteimpuls, der eine Weiterschaltung der Leseeinrichtung B des Haltespeichers K bewirkt, und zwar noch innerhalb derselben Signalkanal-Sendezeitlage. Die Leseeinrichtung B entnimmt nun dem als nächstes erreichten Speicherglied des Haltespeichers K eine weitere Informationsspeicher-Speichergliedadresse, und zwar wieder mit der zusätzlichen Positionsangabe. Die Leseeinrichtung B gibt beide an die Leseeinrichtung L weiter, die mittels dieser Adresse eingestellt wird und anhand dieser Positionsangabe entweder das erste oder das zweite Halbwort aus dem betreffenden Informationsspeicherglied entnimmt. Das nun entnommene Halbwort kommt als zweites innerhalb der jeweiligen Signalkanal-Sendezeitlage zur Aussendung.

Die Zeitlage eines einem Nachrichtenkanal zugeordneten und über die Zeitmultiplexleitung p auszusendenden Halbwortes ist also in dreifacher Hinsicht bestimmt. Erstens handelt es sich immer um die Signalkanal-Zeitlage innerhalb eines Pulsrahmens. Zweitens handelt es sich um eine bestimmte Überpulsrahmen-Zeitlage, also eine Zeitlage innerhalb jedes der Überpulsrahmen. Drittens handelt es sich um die Position des betreffenden Halbwortes innerhalb dieser Überpulsrahmen-Zeitlage, also um die Frage, ob das betreffende Halbwort innerhalb der Überpulsrahmen-Zeitlage an erster oder an zweiter Stelle steht. Die Überpulsrahmen-Zeitlage und die Position entsprechen der Zuordnung eines jeden Halbwortes zu dem betreffenden Nachrichtenkanal.

Wie oben ausgeführt wurde, wird die aus dem Haltespeicher K jeweils zu lesende Informationsspeicher-Speichergliedadresse über die Gatterschaltung G immer der Gatterschaltung E bereits angeboten, wenn die Leseeinrichtung A des Haltespeichers H das Haltespeicherglied h16 erreicht. Im Gegensatz dazu besteht aber auch die Möglichkeit, dass der erste Haltespeicher H immer bei Erreichen der Signalkanal-Zeitlage innerhalb eines Pulsrahmens, also einer Pulsrahmen-Zeitlage, den zweiten Haltespeicher K veranlasst, eine in ihm gespeicherte Informationsspeicher-Speichergliedadresse zu lesen und als Adresse für die Ansteuerung des Informationsspeichers an dessen Leseeinrichtung L abzugeben. Hierzu wäre es erforderlich, die Hilfsinformation, die jeweils aus dem Haltespeicherglied h16 gelesen wird, nicht der Gatterschaltung E zuzuführen, sondern dem Haltespeicher K bzw. dessen Leseeinrichtung B.

Mit Hilfe der anhand der Zeichnung beschriebenen Anordnung ist es möglich, die Signalisierinformation, die jedem der über die Zeitmultiplexleitung e übertragenen Kanäle zugeordnet ist, ebenso wie die diesen Kanälen zugeordneten Worte (Teilinformationen) zeitmultiplex zur Zeitmultiplexleitung p durchzuschalten. Die vermittlungstechnische Zuordnung erfolgt dabei jeweils pro Pulsrahmen für die der Nachrichtenübertragung dienenden Worte und pro Überpulsrahmen für die der Signalisierung dienenden Halbworte. Diese beiderlei vermittlungstechnischen Zuordnungen, und zwar einerseits der der Nachrichtenübertragung dienenden Kanäle zueinander und andererseits der der Signalisierung dienenden Halbworte innerhalb des Signalkanals, entsprechen einander.

Wie oben ausgeführt, dient von den über den Signalkanal übertragenen PCM-Worten das erste innerhalb eines Überpulsrahmens u.a. zur Übertragung des Überpulsrahmen-Kennungswortes. Das zweite dieser PCM-Worte umfasst die beiden der Signalisierung von Schaltkennzeichen dienenden Halbworte, die zwei ersten der als Nachrichtenkanäle dienenden übrigen Zeitkanäle zugeordnet sind. Als Beispiel sei hierzu angegeben, dass den beiden Halbworten jenes zweiten der innerhalb eines Überpulsrahmens über den Signalkanal übertragenen PCM-Worte die Kanäle 1 und 2 zugeordnet sind. In Abweichung davon kann aber diese Zuordnung auch anders festgelegt sein. Im Zusammenhang mit den im obigen „Orange Book" gegebenen Erläuterungen können z.B. auch die Kanäle 1 und 17 den beiden Halbworten des obigen zweiten PCM-Wortes zugeordnet sein, ferner die Kanäle 2 und 18 dem dritten PCM-Wort usw. In diesem Falle arbeitet die anhand der Zeichnung beschriebene Schaltungsanordnung in sinngemässer Weise.

## Patentansprüche

1. Schaltungsanordnung für Zeitmultiplex-Fernmeldevermittlungsanlagen, insbesondere PCM-Fernsprechvermittlungsanlagen, mit Zeitmultiplexleitungen, auf denen jeweils eine Mehrzahl von Zeitkanälen ein Zeitmultiplex bilden, und auf denen den Zeitkanälen unterschiedliche, sukzessive aufeinanderfolgende Zeitlagen zugeordnet sind, und auf denen die Zeitlagen in Pulsrahmen geordnet sind, und auf denen jedem einzelnen der Zeitkanäle in den verschiedenen aufeinanderfolgenden Pulsrahmen jeweils die gleiche Zeitlage zugeordnet ist, und mit mit Informationsspeichern (D) und Haltespeichern (H) ausgestatteten Zeitlagenvielfachen, über die Zeitkanäle auf einer eingangsseitig angeschlossenen Zeitmultiplexleitung (e) einzeln mit Zeitkanälen auf einer ausgangsseitig angeschlossenen Zeitmultiplexleitung (p) vermittelbar sind, und mit je einem pro Zeitmultiplex vorgesehenen und als einer von dessen Zeitkanälen zur Übertragung von einzeln den übrigen Zeitkanälen zugeordneten Schaltkennzeichen dienenden Signalkanal, dessen Zeitlagen über eine Mehrzahl von Pulsrahmen hinweg zu ebenso wie die Pulsrahmen sukzessive aufeinanderfolgenden Überpulsrahmen zusammengefasst sind, innerhalb von welchen den übrigen Zeitkanälen, die verbindungsindividuell als Nachrichtenkanäle dienen, Zeitlagen innerhalb des Überpulsrahmens zugeordnet sind, und mit Informationsspeichern (D), bei denen der Schreibbetrieb entsprechend den aufeinanderfolgenden Zeitlagen der über die eingangsseitig angeschlossene Zeitmultiplexleitung (e) geführten Kanäle zyklisch und der Lesebetrieb gemäss im Haltespeicher (H) gespeicherten Informationsspeicher-Speichergliedadressen abgewickelt wird, und bei denen an mehreren Informationsspeicherplätzen (D0-D31) Signalkanal-Teilinformationen gemäss der stets wiederkehrenden Reihenfolge ihrer Zeitlagen innerhalb jeder der Überpulsrahmen zyklisch gespeichert werden, und mit Haltespeichern (H), welche entsprechend den aufeinanderfolgenden Zeitlagen der über die ausgangsseitig angeschlossene Zeitmultiplexleitung (p) geführten Kanälen zyklisch gelesen werden, dadurch gekennzeichnet, dass einem Informationsspeicher (D) ausser einem ersten Haltespeicher (H), dessen Lesezyklus der Pulsrahmendauer entspricht, ein zweiter Haltespeicher (K) zugeordnet ist, dessen Weiterschaltung mit jedem Lesezyklus des ersten Haltespeichers (H) erfolgt, wodurch dessen Lesezyklus demgemäss einer Überpulsrahmendauer entspricht, die ein Mehrfaches der Pulsrahmendauer beträgt, dass die in dem Informationsspeicher (D) der Aufnahme der Signalkanal-Teilinformationen dienenden Informationsspeicherplätze (D1600a/D1600b-D1615a/D1615b) dementsprechend mehrfach vorgesehen sind, und dass regelmässig bei Erreichen desjenigen Haltespeicherplatzes (z.B. h17) beim zyklischen Lesevorgang des ersten Haltespeichers (H), der einer der Signalkanal-Zeitlagen — also einer der Pulsrahmen-Zeitlagen — entspricht, mit Hilfe einer Informationsspeicher-Speicherplatzadresse, die im zweiten Haltespeicher (K) gemäss der innerhalb eines Überpulsrahmens erreichten Zeitlage — also einer Überpulsrahmen-Zeitlage — gespeichert ist, ein diejenige Signalkanal-Teilinformation speicherndes Informationsspeicherglied (z.B. D1602a/D1602b) angesteuert wird, die zu demjenigen der übrigen Zeitkanäle gehört, welchem die genannte Pulsrahmen-Zeitlage und die genannte Überpulsrahmen-Zeitlage fest zugeordnet ist.

2. Schaltungsanordnung nach Anspruch 1, dadurch gekennzeichnet, dass der erste Haltespeicher (H) bei Erreichen der Signalkanal-Zeitlage innerhalb eines Pulsrahmens, also einer Pulsrahmen-Zeitlage, den zweiten Haltespeicher (K) veranlasst, eine in ihm gespeicherte Informationsspeicher-Speichergliedadresse zu lesen und als Adresse für die Ansteuerung des Informationsspeichers (D) abzugeben.

## Claims

1. A circuit arrangement for time division multiplex telecommunications exchanges, in particular PCM telephone exchanges, with t.d.m. lines on which a plurality of time channels in each case form a t.d.m., and on which the time channels are assigned different, consecutive time slots, and on which the time slots are classified in pulse frames, and on which each individual member of the time channels in the various consecutive pulse frames is respectively assigned the same time slot, and with time slot multiplexers which are equipped with information stores (D) and hold stores (H) and *via* which time channels on a t.d.m. line (e) connected at the input end can be individually switched through to time channels on a t.d.m. line (p) connected at the output end, and with one signalling channel provided in respect of each t.d.m. which serves as one of the latter's time channels for the transmission of switching characteristics individually assigned to the other time channels, and whose time slots are combined over a plurality of pulse frames to form super pulse frames which follow one another in the same way as the pulse frames and within which other time channels, which serve as communications channels in respect of each individual connection, are assigned time slots within the super pulse frame, and with information stores (D) in which the write-in operation is carried out cyclically in accordance with the consecutive time slots of the channels which extend *via* the t.d.m. line (e) connected at the input end, and the read-out operation is carried out in accordance with information store - storage element addresses stored in the hold store (H), and in which, at a plurality of information storage locations (D0-D31), items of signalling channel subsidiary information are cyclically stored in accordance with the constantly recurring sequence of their time slots within each of the super pulse frames, and with hold stores (H) which are cyclically read out in accordance with the consecutive time slots of the channels which extend *via* the t.d.m. line (p) connected at the output end, characterised in that an information store (D) is assigned, in addition to a first hold store (H) whose read-out cycle corresponds to the pulse frame duration, a second hold store (K) which is further switched with each read-out cycle of the first hold store (H), as a result of which its read-out cycle corresponds accordingly to the duration of a super pulse frame which amounts to a multiple of the pulse frame duration, that the information storage locations (D1600a/D1600b-D1615a/D1615b) which serve to accommodate the items of signalling channel subsidiary information in the information store (D) are multiply provided accordingly and that in regular fashion when, during the cyclic read-out operation of the first hold store (H), that hold store location (e.g. h17) is reached which corresponds to one of the signalling channel time slots — thus one of the pulse frame time slots — with the assistance of an information store - storage position address which is stored in the second hold store (K) in accordance with the time slot which has been reached within a super pulse frame — thus a super pulse frame time slot — an information storage element (e.g. D1602a/D1602b) is actuated which stores that item of signalling channel subsidiary information which is assigned to that member of the other time channels which is permanently assigned the aforementioned pulse frame time slot and the aforementioned super pulse frame time slot.

2. A circuit arrangement as claimed in Claim 1, characterised in that when the signalling channel time slot within a pulse frame, thus a pulse frame time slot, has been reached, the first hold store (H) causes the second hold store (K) to read out an information store - storage element address which it is storing and to emit this as an address for the actuation of the information store (D).

## Revendications

1. Montage pour des installations de télécommunications à multiplexage temporel, notamment des installations de téléphonie MIC, comportant des lignes de multiplexage temporel, dans lesquelles une multiplicité de canaux temporels forment respectivement un multiplex temporel, et dans lesquelles aux canaux temporels sont associés des créneaux temporels successifs différents, et dans lesquelles des créneaux temporels sont disposés dans des trames d'impulsions et dans lesquelles aux différents canaux temporels des différentes trames d'impulsions successives se trouvent associés les mêmes créneaux temporels, et comportant des multiples servant au multiplexage de créneaux temporels, équipés de mémoires d'informations (D) et de mémoires de maintien (H) et par l'intermédiaire desquels les canaux temporels présents dans une ligne de multiplexage temporel (e) raccordée du côté entrée peuvent être mis en communication individuellement avec des canaux temporels présents dans une ligne de multiplexage temporel (p) raccordée au côté sortie, et comportant un canal de transmission de signaux, prévu respectivement pour chaque multiplex temporel et utilisé en tant que l'un des canaux temporels de ce multiplex temporel, pour la transmission de signaux caractéristiques de commutation associés individuellement aux autres canaux temporels, et dont les créneaux temporels sont réunis, parmi une multiplicité de trames d'impulsions, pour former des trames d'impulsions de rang supérieur se succédant tout comme les trames d'impulsions et à l'intérieur desquelles des créneaux temporels sont associés aux autres canaux temporels, qui servent, pour chaque liaison, de canaux de transmission de données à l'intérieur de chaque trame d'impulsions de rang supérieur, et comportant des mémoires d'informations (D) dans lesquelles le fonctionnement de l'enregistrement se déroule de façon cyclique conformément aux créneaux temporels successifs des canaux circulant dans la ligne de multiplexage temporel (e) raccordée du côté entrée, et le fonctionnement à la lecture se déroule conformément à des adresses d'éléments de la mémoire d'informations mémorisés dans la mémoire de maintien (H), et dans lesquelles des informations partielles sur les canaux de transmissions de signaux sont mémorisées cycliquement dans plusieurs cases (D0-D31) de la mémoire d'informations, conformément à la succession toujours répétitive de leurs créneaux temporels à l'intérieur de chacune des trames d'impulsions de rang supérieur, et comportant des mémoires de maintien (H) qui sont lues cycliquement conformément aux créneaux temporels successifs des canaux circulant dans la ligne de multiplexage temporel (p) raccordé du côté sortie, caractérisé par le fait qu'à une mémoire d'informations (D) se trouve associée, outre une première mémoire de maintien (H) dont le cycle de lecture correspond à la durée de la trame d'impulsions, une seconde mémoire de maintien (K) dont l'avance est réalisée lors de chaque cycle de lecture de la première mémoire de maintien (H), ce qui a pour effet que le cycle de lecture de cette mémoire correspond par conséquent à une durée d'une trame d'impulsions de rang supérieur qui est égale à un multiple de la durée d'une trame d'impulsions, que de façon correspondante, les cases (D1600a/

D1600b-D1615a/D1615b) servant à la réception des informations partielles des canaux de transmission de signaux sont prévues de façon multiple, et que de façon régulière, lorsqu'est atteinte, lors du processus de lecture cyclique de la première mémoire de maintien (H), la case (par exemple h17) de cette mémoire de maintien, qui correspond à l'un des créneaux temporels des canaux de transmission de signaux — c'est-à-dire à l'un des créneaux temporels de la trame d'impulsions —, à l'aide d'une adresse de la case de la mémoire d'informations qui est mémorisée dans la seconde mémoire de maintien (K) conformément au créneau temporel atteint à l'intérieur d'une trame d'impulsions de rang supérieur — c'est-à-dire un créneau temporel de la trame d'impulsions de rang supérieur — un élément (par exemple D1602a/ D1602b) de la mémoire d'informations qui mémorise l'information partielle du canal de transmission de signaux qui est associé à celui des autres canaux temporels, qui est associé de façon fixe audit créneau temporel de la trame d'impulsions et audit créneau temporel de la trame d'impulsions de rang supérieur, est sélectionné.

2. Montage suivant la revendication 1, caractérisé par le fait que lorsque le créneau temporel du canal de transmission de signaux à l'intérieur d'une trame d'impulsions, c'est-à-dire un créneau temporel d'une trame d'impulsions, est atteint, la première mémoire de maintien (H) commande la seconde mémoire de maintien (K) pour la lecture d'une adresse d'un élément de la mémoire d'informations mémorisée dans cette mémoire de maintien, et pour la délivrance de cette adresse en tant qu'adresse servant à la sélection de la mémoire d'informations (D).